**Europäisches Patentamt**

**European Patent Office**

**Office européen des brevets**

(19)

(11) Veröffentlichungsnummer: **0 111 923**
**B1**

(12) # EUROPÄISCHE PATENTSCHRIFT

(45) Veröffentlichungstag der Patentschrift:
08.02.89

(51) Int. Cl.⁴: **C 01 B 3/00**, C 01 B 3/56,
C 01 B 6/04

(21) Anmeldenummer: 83112796.4

(22) Anmeldetag: 20.12.83

(54) **Verfahren zur Abtrennung und Reinigung von Wasserstoff.**

(30) Priorität: 22.12.82 DE 3247361

(43) Veröffentlichungstag der Anmeldung:
27.06.84 Patentblatt 84/26

(45) Bekanntmachung des Hinweises auf die Patenterteilung:
08.02.89 Patentblatt 89/6

(84) Benannte Vertragsstaaten:
AT BE CH DE FR GB IT LI LU NL

(56) Entgegenhaltungen:
EP-A- 0 003 564
DE-A- 1 667 473
DE-A- 2 846 673
DE-A- 2 945 981

(73) Patentinhaber: **Studiengesellschaft Kohle mbH,
Kaiser-Wilhelm-Platz 1, D-4330 Mülheim/Ruhr (DE)**

(72) Erfinder: **Bodanovic, Borislav, Dr. Dipl.-Chem. Prof.,
Kaiser-Wilhelm-Platz 1, D-4330 Mühlheim/Ruhr (DE)**

(74) Vertreter: **von Kreisler, Alek, Dipl.-Chem. et al,
Deichmannhaus am Hauptbahnhof, D-5000 Köln 1 (DE)**

## Beschreibung

Die vorliegende Erfindung betrifft ein Verfahren zur Abtrennung von Wasserstoff aus wasserstoffhaltigen Gasgemischen bzw. zur Reinigung desselben.

Die DE 1 667 473 betrifft ein Verfahren zum Speichern und Erzeugen von Wasserstoff und insbesondere ein wiederaufladbares Wasserstoffspeicherungs- und -erzeugungssystem, bei dem Wasserstoff als Hydrid von Magnesium gespeichert und bei Bedarf durch thermische Zersetzung von Magnesiumhydrid erzeugt wird und das durch Umsetzen des bei der Zersetzung des Hydrids gebildeten Magnesiums mit frischem Wasserstoff wieder aufgeladen wird. Der zur Wiederbeladung verwendete Wasserstoff braucht nur technisch rein zu sein. Daher können gewisse wasserstoffhaltige Raffineriegasströme als Wasserstoffquelle verwendet werden. Jedoch müssen diese Ströme frei von Magnesiumgiften, d.h. Kohlenmonoxid, Kohlendioxid, Schwefelwasserstoff und Luft in Mengen über 1 Mol-%, sein. Diese Verbindungen beeinträchtigen sehr stark die Wiederbeladungsgeschwindigkeit und erfordern ein Arbeiten bei hoher Temperatur und hohem Druck.

Zur Abtrennung von Wasserstoff aus wasserstoffhaltigen Gasgemischen und zur Reinigung von Wasserstoff werden gegenwärtig in der Technik die Absorptions- bzw. Adsorptionsverfahren (einschl. Druckwechsel-Adsorption) sowie Verfahren, die auf Tieftemperaturdestillation bzw. -kondensation und Diffusion der Gase durch semipermeable Membranen beruhen, verwendet (Heck u. Johansen, Hydrocarb. Proc., Jan. 1978, 175; Werner, Chem.-Ing.-Techn. 53 (2), 73 (1981)).

Da die Verfahren für die Wasserstoffabtrennung und -reinigung sowohl bezüglich der Investitionsals auch der Betriebskosten als relativ kostspielig gelten und einen beträchtlichen Teil der Gesamtkosten für die Wasserstoffherstellung ausmachen, muss für jede gegebene Trennungs- bzw. Reinigungsaufgabe die wirtschaftlich und technisch optimale Lösung gesucht werden. Seit einigen Jahren wird die reversible Reaktion von Wasserstoff mit einigen Metallen, Metall-Legierungen oder intermetallischen Verbindungen (Gleichung 1) als eine mögliche Basis für Wasserstoffanreicherung bzw. -reinigung vorgeschlagen und untersucht (Snape u. Lynch, CHEMTECH, Dez. 1980, 768; Sandrock u. Huston, CHEMTECH, Dez. 1981, 754; Huston u. Sheridan, ACS Symp. Ser. 1981 (1964), 223).

$$M + \frac{x}{2}H_2 \rightarrow MH_x \qquad (1)$$

M = Metall, Metall-Legierung, intermetallische Verbindung

Nach Huston und Sheridan sind Wasserstofftrennverfahren auf Basis der Metallhydride als komplementäre Technologien zu kryogenen bzw. Adsorptionsverfahren anzusehen, wobei sich wegen der Spezifität der Reaktion der Gleichung 1 besondere Vorteile für magere Wasserstoffströme bezüglich der Ausbeute und der Reinheit des gewonnenen Wasserstoffs ergeben. Solche mageren Wasserstoffströme fallen z.B. bei bestimmten Raffinerieprozessen an («off-gas streams») und konnten bisher nicht wirtschaftlich ausgebeutet werden. In diesem Sinne konnte eine vollständige Abtrennung des Wasserstoffs von Methan aus Wasserstoff-Methan-Gemischen mit 10–50% Wasserstoff mit Hilfe von $Fe_xTiNi_{1-x}$-Legierungen erreicht werden (Cholera und Diaspow, Proc. 12th Intersociety Energy Convers. Eng. Conf. 1976 (1), 981).

Die Voraussetzung für eine erfolgreiche Anwendung der Metallhydrid-Metall-Systeme zur Abtrennung und Reinigung von Wasserstoff ist, dass die Hydrierung auch bei relativ geringen Wasserstoffpartialdrucken mit einer akzeptablen Kinetik vonstatten geht und dass sie nicht durch die in Wasserstoff vorhandenen Verunreinigungen wie CO, $CO_2$, $O_2$, $H_2O$ und $NH_3$ inhibiert wird.

Die Nachteile der bekannten intermetallischen Systeme zum Zwecke der Wasserstoffabtrennung, -reinigung und -speicherung sind ihre relativ niedrigen $H_2$-Kapazitäten (1,5–1,7 Gew.-%) und die damit verbundenen hohen Investitions- bzw. Materialkosten.

Daraus geht hervor, dass für den Einsatz von Metallhydrid-Metall-Systemen zum Zwecke der Wasserstoffanreicherung und -reinigung unter den Gesichtspunkten der Kosten und der Eiffizienz noch keine befriedigende technische Lösung vorliegt.

Es wurde nun überraschenderweise gefunden, dass eine aktive Form des metallischen Magnesiums als Hydridbildner den an Metall-Metallhydrid-Systeme zum Zwecke der Wasserstoffabtrennung bzw. -reinigung gestellten Anforderungen genügt.

Die Erfindung betrifft ein Verfahren zur Abtrennung und Reinigung von Wasserstoff aus Wasserstoff enthaltenden Gasgemischen durch Hydrieren von Magnesium und anschliessende thermische Dehydrierung der gebildeten Magnesiumhydride, dadurch gekennzeichnet, dass man Wasserstoff aus derartigen Gasgemischen, die Methan und/oder seine höheren Homologen, Stickstoff und Edelgase sowie geringe Mengen von CO, $CO_2$, $O_2$, $H_2O$, $NH_3$ und/oder $H_2S$ enthalten, durch Kontakt mit Magnesium in einer aktiven Form selektiv absorbiert und durch thermische Spaltung der entstandenen Magnesiumhydride Wasserstoff in reiner Form und Magnesium in aktiver Form zurückgewinnt, wobei als aktive Form des Magnesiums, Magnesiummetall, erhältlich durch thermische Dehydrierung der Magnesiumhydride, eingesetzt wird, die durch ein Verfahren hergestellt werden, in dem man Magnesium in Gegenwart eines Katalysators, bestehend aus einem Halogenid eines Metalls der IV. bis VIII. Nebengruppe des periodischen Systems und einer magnesiumorganischen Verbindung bzw. eines Magnesiumhydrids sowie ggf. in Gegenwart eines policyclischen Aromaten oder eines tertiären Amins sowie ggf. in Gegenwart eines Magnesiumhalogenids $MgX_2$ mit X = Cl, Br, J, mit Wasserstoff umsetzt.

Die Erfindung betrifft ferner ein Verfahren zur Abtrennung und Reinigung von Wasserstoff aus Wasserstoff enthaltenden Gasgemischen durch Hydrieren von Magnesium und anschliessende thermische Dehydrierung der gebildeten Magnesiumhydride, dadurch gekennzeichnet, dass man Wasserstoff aus derartigen Gasgemischen, die Methan und/oder seine höheren Homologen, Stickstoff und Edelgase sowie geringe Mengen von $CO$, $CO_2$, $O_2$, $H_2O$, $NH_3$ und/oder $H_2S$ enthalten, durch Kontakt mit Magnesium in einer aktiven Form selektiv absorbiert und durch thermische Spaltung der entstandenen Magnesiumhydride Wasserstoff in reiner Form und Magnesium in aktiver Form zurückgewinnt, wobei als aktive Form des Magnesiums Magnesiummetall eingesetzt wird, das durch thermische Dehydrierung von mit Übergangsmetallen dotiertem Magnesiumhydrid gewonnen wird, wobei die Dotierung nach einem Verfahren erfolgt, in dem man Magnesiumhydrid oder metallisches Magnesium in fein verteilter Form, ggf. in Gegenwart von Wasserstoff, in Kontakt mit einer Lösung eines Übergangsmetallkomplexes bzw. einer Übergangsmetallorganischen Verbindung bringt und dadurch das elementare Übergangsmetall in äusserst feinverteilter Form an der Oberfläche der Magnesiumhydrid- bzw. Magnesiumpartikel ausscheidet.

In besonderem Masse als im Sinne des vorliegenden Verfahrens aktive Form des Magnesiums eignet sich Magnesium, das nach dem Verfahren der Europa-PS 0 003 564 hergestellt und anschliessend thermisch dehydriert wird.

Dabei handelt es sich um ein homogenkatalytisches Verfahren, in dem man Magnesium in Gegenwart eines Katalysators, bestehend aus einem Halogenid eines Metalls der IV. bis VIII. Nebengruppe des periodischen Systems und einer magnesiumorganischen Verbindung bzw. eines Magnesiumhydrids sowie ggf. in Gegenwart eines policyclischen Aromaten oder eines tertiären Amins sowie ggf. in Gegenwart eines Magnesiumhalogenids $MgX_2$ mit X = Cl, Br, J, mit Wasserstoff umsetzt.

Zu einer derartigen aktiven Form des Magnesiums gehört ferner Magnesium, das durch Dehydrierung der nach dem homogenkatalytischen Verfahren hergestellten und mit Übergangsmetallen dotierten Magnesiumhydride gewonnen wird. Die Dotierung der Magnesiumhydride mit Übergangsmetallen erfolgt dadurch, dass man, ggf. in Gegenwart von Wasserstoff, Magnesiumhydrid oder metallisches Magnesium in fein verteilter Form in Kontakt mit einer Lösung eines Übergangsmetallkomplexes bzw. einer übergangsmetallorganischen Verbindung bringt, und führt zu Magnesiumhydrid-Magnesium-Wasserstoffspeichersystemen, die eine gegenüber dem nach der Europa-PS 0 003 564 hergestellten aktiven Magnesiumhydrid verbesserte Kinetik der Hydrierung bzw. Dehydrierung zeigen (EP-A-0 112 548).

Als Übergangsmetalle werden dabei die Elemente der IV. bis VIII. Nebengruppe des periodischen Systems, insbesondere Ti, V, Cr, Mo, W, Fe, Ru, Co, Rh, Ir, Ni, Pd und/oder Pt verwendet.

Bevorzugte Übergangsmetallkomplexe bzw. übergangsmetallorganische Verbindungen sind Bis-(cyclooctadien-1,5)nickel ($COD_2Ni$), Bis($\eta^3$-allyl)-nickel, Tetracarbonylnickel, Bis(acetylacetonato)nickel, Bis(ethylato)nickel oder Phosphannickelkomplexe sowie Bis($\eta^3$-allyl)palladium, Palladium-Phosphankomplexe, Tris($\eta^3$-allyl)eisen, Ferrocen oder Eisencarbonyle.

Für die Dotierung, bei der elementares Übergangsmetall erzeugt und in äusserst feiner Verteilung an der Oberfläche der Magnesiumhydrid- bzw. Magnesiumpartikel ausgeschieden wird, seien folgende Verfahrensvarianten beispielhaft angeführt:

a) Dotierung durch thermische Zersetzung des gelösten Übergangsmetallkomplexes:

$$MgH_2 + COD_2Ni \xrightarrow[-2COD]{100-110\,°C} MgH_2(Ni)$$

b) Dotierung durch Hydrierung des Übergangsmetallkomplexes:

$$Mg_{H2} + COD_2Ni + 4H_2 \xrightarrow[-2C_8H_{16}]{20\,°C} MgH_2$$

c) Dotierung durch unmittelbare Reaktion des Magnesiumhydrids mit der übergangsmetallorganischen Verbindung:

$$MgH_2 + Pd\,(^3{-}C_3H_5)_2 \xrightarrow{RT} Mg(Pd) + 2\,C_3H_6$$

d) Dotierung durch Reduktion des Übergangsmetallkomplexes mit Magnesiumhydrid

$$2\,MgH_2 + NiX_2 \longrightarrow MgH_2(Ni) + MgX_2 + H_2$$

X = komplexbildender Ligand, z.B. (Acetylacetonat)$^\ominus$

Auch weitere in der genannten Patentschrift bzw. Patentanmeldung beschriebene, durch Dotierung bzw. Dehydrierung erhaltene Magnesiumformen können als aktive Formen des Magnesiums im Sinne des vorliegenden Verfahrens angewendet werden. Gemeinsames Merkmal solcher aktiven Formen des Magnesiums ist ihre hohe Reaktionsfähigkeit gegenüber Wasserstoff, d.h. dass sie bereits unter relativ milden Reaktionsbedingungen ($H_2$-Druck 1–3 bar, Temperatur 150–200 °C) mit Wasserstoff unter Bildung der Magnesiumhydride reagieren.

Das vorliegende Verfahren zur Abtrennung und Reinigung von Wasserstoff besteht darin, dass ein derart «aktives Magnesium» mit wasserstoffhaltigen Gasen, die ausser Wasserstoff Methan und Homologe, Stickstoff und Edelgase enthalten können, in Kontakt gebracht wird, wobei Wasserstoff in Form von Magnesiumhydriden selektiv absorbiert und bis auf wenige Prozent abgereichert wird. Durch Dehydrierung des so gebildeten Magnesiumhydrids erhält man reinen Wasserstoff, wobei erneut «aktives Magnesium» anfällt, so dass der Prozess der Beladung mit Wasserstoff

wiederholt werden kann. Auf diesem Wege ist eine einstufige und praktisch vollständige Abtrennung des Wasserstoffs aus Gasen möglich, deren restlicher Teil gegenüber «aktivem Magnesium» und Magnesiumhydriden inert ist.

Die entscheidenden Vorteile des vorliegenden Verfahrens sind 1. dass die Hydrierung des «aktiven Magnesiums» auch bei geringen Wasserstoffpartialdrucken, d.h. bei wasserstoffarmen Gasgemischen, mit akzeptabler Geschwindigkeit möglich ist und 2. dass die Kinetik der Hydrierung nicht oder nur unwesentlich selbst durch die in Wasserstoff üblicherweise vorhandenen Verunreinigungen CO, $CO_2$, $O_2$, $NH_3$, $H_2O$ und $H_2S$ beeinträchtigt wird. Diese Verunreinigungen mit Wasserstoff werden während der Hydrierung vom «aktiven Magnesium» bzw. von Magnesiumhydriden entweder irreversibel absorbiert oder in Produkte umgewandelt, die nach der Hydrierung im Restgas verbleiben. So werden z.B. Spuren $H_2O$ und $O_2$ in Wasserstoff bzw. Wasserstoffgemischen während der Hydrierung irreversibel absorbiert, während CO in Methan umgewandelt wird, das nach der Hydrierung im Restgas verbleibt (Beispiele 3 und 4). Bei der Dehydrierung der dabei entstandenen Magnesiumhydride erhält man in jedem Fall reinen Wasserstoff. Auf diese Weise ist nach dem vorliegenden Verfahren auch die Reinigung von Wasserstoff von geringen Mengen sowohl der «inerten» ($CH_4$ und Homologen, $N_2$ und Edelgase), als auch der «reaktiven» Gase (CO, $CO_2$, $O_2$, $H_2O$, $NH_3$, $H_2S$) möglich, bei den letzteren verbunden mit einer langsamen Abnahme der Wasserstoffkapazität des «aktiven Magnesiums».

Weitere Vorteile des vorliegenden Verfahrens sind die hohe Wasserstoffkapazität des «aktiven Magnesiums» (6 bis 7,5 Gew.-% $H_2$) sowie der im Vergleich zu intermetallischen Verbindungen (FeTi, $LaNi_5$ usw.) relativ niedrige Magnesiumpreis.

Das Verfahren kann in folgenden Fällen mit besonderen Vorteilen angewendet werden:

1. Abtrennung von Wasserstoff aus wasserstoffarmen Gasgemischen, die ausser Wasserstoff Methan und Homologe, Stickstoff und Edelgase sowie ggf. geringe Mengen von CO, $CO_2$, $O_2$, $H_2O$, $NH_3$ und $H_2S$ enthalten.

2. Reinigung des Wasserstoffs von geringen Mengen sowohl der «inerten» ($CH_4$ und Homologen, $N_2$ und Edelgase) als auch der «reaktiven» (CO, $CO_2$, $O_2$, $H_2O$, $NH_3$ und $H_2S$) Gase.

Die Reaktionsbedingungen für die Beladung des «aktiven Magnesiums» mit Wasserstoff bzw. für die Entladung der Magnesiumhydride vom Wasserstoff können in breiten Grenzen variiert werden. Als bevorzugte Reaktionsbedingungen für die Beladung gelten 150 bis 400°C bei Wasserstoffpartialdrucken von 0,1 bis 100 bar und für die Entladung 250 bis 450°C, entsprechend Wasserstoffgleichgewichtsdrucken von 0,37 bis 40 bar.

Die Erfindung wird durch die nachfolgenden Beispiele näher erläutert.

Für die Versuche wurde technischer Wasserstoff (99,9%, Rest: $O_2$ max. 10 ppm, $N_2$ max. 1000 ppm, $H_2O$ max. 100 ppm) verwendet; dieser wurde in einem Druckbehälter in dem gewünschten Verhältnis mit $CH_4$ bzw. CO vermischt. Bei der Durchführung der Hydrier-Dehydrier-Cyclen wurden jeweils frische $H_2$/$CH_4$- bzw. $H_2$/CO-Gasmengen dem Druckbehälter entnommen.

Beispiel 1

15,0 kg (617 mol) Magnesiumpulver (50 mesh (0,3 mm)) in 75 l abs. Tetrahydrofuran (THF) wurden in einem Rührkessel nach dem in der Europa-PS 0 003 564 beschriebenen Verfahren in Gegenwart des Titankatalysators (Mg:$TiCl_4$:Anthracen = 100:1:1) bei 60–73°C und 2 bar $H_2$-Druck zu Magnesiumhydrid hydriert. Zur Dotierung mit Nickel wurde zur Suspension des Magnesiumhydrids in THF, nachdem die Wasserstoffatmosphäre im Kessel gegen eine Argonatmosphäre ausgewechselt worden war, 1,4 kg (5 mol) festes Bis(1,5-cyclooctadien)nickel ($COD_2$Ni) zugegeben und der Rührkesselinhalt 4 h bei 100°C gerührt. Das mit Nickel dotierte Magnesiumhydrid wurde anschliessend filtriert, mit THF und Pentan gewaschen und im Vakuum (0,2–0,4 mbar) bei 50°C getrocknet. Zur Befreiung von Resten des organischen Materials wurde das so erhaltene Produkt einem Dehydrier-Hydriercyclus unterworfen (Dehydrierung: 230–370°C/10–0,4 bar; Hydrierung: 335–350°C/5–10 bar). Erhalten wurden 14,0 kg Magnesiumhydrid als pyrophores, hellgraues Pulver folgender Zusammensetzung: C 0,0, H 6,01, Mg 85,17, Ti 1,51, Cl 2,72 und Ni 0,89%.

Eine 15,2 g-Probe dieses Hydrids wurde in einem 300 ml Edelstahlautoklaven bei 372°C und Normaldruck zum «aktiven» Magnesium dehydriert. In den Autoklaven wurde darauf bei 227°C (Autoklaventemperatur) ein $CH_4$/$H_2$-Gemisch mit 14,2 Vol.-% $H_2$ (Rest $CH_4$) bis auf einen Druck von 10 bar aufgepresst, wobei ein kurzzeitiger Anstieg der Temperatur der Probe bis 231°C zu verzeichnen war. Nach 1 h und 10 min. bei 227°C wurde der Autoklav auf Normaldruck entspannt und das abgeblasene Gas analysiert. Nach der MS-Analyse enthielt dieses nur noch 1,9 Vol.-% $H_2$ (Rest $CH_4$), was nahe dem berechneten Gleichgewichtsdruck des Wasserstoffs über Magnesiumhydrid bei 227°C (ber. 1,5 Vol.-% $H_2$) liegt. Der Vorgang der Hydrierung des «aktiven Magnesiums» mit dem $CH_4$/$H_2$-Gemisch und des Ablassens des nicht umgesetzten Gasgemisches wurde bei gleichbleibender Temperatur noch 36 mal wiederholt, wobei Druck und Hydrierzeiten variiert wurden. Zum Öffnen und Schliessen der Ventile bediente man sich einer an den Autoklaven angeschlossenen, vollautomatischen, elektronischen Steuerapparatur. Die Daten über den Versuch gibt die folgende Tabelle 1.

Tabelle 1

| Ordungszahl d. Hydrierung | Druck (bar) | Hydrierzeit (h) | Mol-% $H_2$ im Restgas |
|---|---|---|---|
| 2. | 10 | 2,4 | 2,6 |
| 3. | 10 | 0,33 | 4,1 |
| 4. | 10 | 12 | 2,4 |

Tabelle 1 (Fortsetzung)

| Ordungszahl d. Hydrierung | Druck (bar) | Hydrier- zeit (h) | Mol-% $H_2$ im Restgas |
|---|---|---|---|
| 5. | 15 | 1,6 | 1,9 |
| 6. | 15 | 0,33 | 2,6 |
| 7. | 15 | 4 | 1,4 |
| 8. | 15 | 12 | 1,2 |
| 9. | 15 | 1,5 | 2,1 |
| 10. | 15 | 1,5 | 2,3 |
| 11. | 15 | 1,5 | 2,2 |
| 12.–21. | 15 | 1,5 | –[a] |
| 22. | 15 | 1,5 | 9,8 |
| 23.–36. | 15 | 1,5 | –[a] |
| 37. | 15 | 1,5 | 12,5 |

[a] nicht gemessen

—

Der Autoklav wurde darauf auf 30 °C abgekühlt und auf 0,1 mbar evakuiert. Beim langsamen Aufheizen des Autoklaven bis auf 363 °C bei Normaldruck entwickelten sich innerhalb von 1 h 9,32 l Gas (20 °C/1 bar). Zu Beginn und gegen Ende der Gasentwicklung wurde je eine Gasprobe massenspektrometrisch analysiert; die Proben enthielten 100,0% Wasserstoff. Aus der entwickelten Wasserstoffmenge errechnet sich für den Versuch eine Auslastung der Speicherkapazität des «aktiven» Magnesiums von ca. 66%. 14,3 g des «aktiven» Magnesiums wurden zurückgewonnen.

Beispiel 2

Der Versuch wurde bei 196 °C und 15 bar Druck des $CH_4/H_2$-Gemisches (14,3 Vol.-% $H_2$), ansonsten analog dem Beispiel 1 durchgeführt. Eingesetzt wurden 14,3 g des im Beispiel 1 beschriebenen, mit 0,89% Ni-dotierten Magnesiumhydrids. Die Hydrierzeiten betrugen jeweils 2 h; der Hydriervorgang wurde 23 mal wiederholt. Den Wasserstoffgehalt des nichtreagierten Gases nach den einzelnen Hydriervorgängen gibt die folgende Tabelle 2 an.

Tabelle 2

| Ordnungszahl des Hydriervorganges | Mol-% $H_2$[*] im Restgas |
|---|---|
| 1. | 0,7 |
| 2. | 0,6 |
| 11. | 1,4 |
| 13. | 2,7 |
| 23. | 12,6 |

[*] Für 196 °C und 15 bar Druck des $CH_4/H_2$-Gemisches errechnet sich eine Gleichgewichtskonzentration von $H_2$ über $MgH_2$ von 0,3 Mol-%.

Bei Entladung des Speichers bei 362 °C entstanden 8,46 l Gas (20 °C/1 bar), das nach MS-Analyse zu 100,0% aus Wasserstoff bestand ($CH_4$: 0,1%). Die Auslastung der Speicherkapazität in diesem Versuch betrug ca. 60%. Die Elementarzusammensetzung des zurückgewonnenen «aktiven» Magnesiums: C 1,04, H 1,38, Mg 94,42, Ti 1,52, Cl 0,71 und Ni 0,69.

Beispiel 3

17,6 g des wie in Beispiel 1 beschrieben dargestellten und mit 0,89% Ni dotierten Magnesiumhydrids wurden in einem 300 ml Edelstahlautoklaven bei 338 °C und Normaldruck zum «aktiven Magnesium» dehydriert ($H_2$-Abgabe 11,7 l 20 °C). In den Autoklaven wurde darauf bei 338 °C Wasserdruck mit 1 mol-% CO (MS-Analyse) bis auf einen Druck von 10 bar aufgepresst und mit Hilfe eines Reduzierventils konstant bei diesem Druck gehalten; der Autoklav wurde bei diesem Prozess aus einem unter Druck stehenden Vorratsbehälter mit Wasserstoff nachgespeist. Während der Hydrierung stieg die Temperatur der Probe kurzzeitig bis auf 373 °C an, blieb ca. 70 min. bei 366 °C und fiel danach auf 338 °C zurück. In dieser Zeit wurde eine Wasserstoffaufnahme von 12,5 l (20 °C, 1 bar) gemessen. Der Autoklav wurde auf 38 °C abgekühlt und entspannt, wobei 1,35 l Gas (20 °C, 1 bar) erhalten wurden. Eine MS-Analyse dieses Gases ergab: $H_2$ 89,3, $CH_4$ 8,1 mol-% (Rest Argon, Luft). Die Menge des entstandenen Methans entspricht praktisch quantitativ der in der aufgenommenen $H_2$-Menge (12,5 l) vorhandenen CO-Menge. Nach Evakuieren auf 0,2 mbar wurde der Autoklav erneut auf 338 °C aufgeheizt und bei gleichbleibender Autoklaventemperatur Magnesiumhydrid während ca. 79 min. bei Normaldruck dehydriert. Dabei entstanden 13,3 l Gas (20 °C, 1 bar), das nach MS-Analyse aus reinem Wasserstoff bestand.

Der Vorgang der Hydrierung des «aktiven Magnesiums» mit 1 mol-% CO enthaltendem Wasserstoff bei 10 bar und der Dehydrierung des entstandenen Magnesiumhydrids bei Normaldruck und konstant gehaltener Autoklaventemperatur von 338 °C wurde noch 27mal wiederholt, wobei man sich zum Öffnen und Schliessen der Ventile einer an den Autoklaven angeschlossenen, vollautomatischen Steuerapparatur bediente. Die nominalen Hydrier- bzw. Dehydrierzeiten betrugen dabei 3 bzw. 2 h und die effektiven Hydrier- bzw. Dehydrierzeiten ca. 1,5 bzw. 1 h; während der Hydrierung stieg die Temperatur der Probe jeweils bis auf 370–373 °C, und während der Dehydrierung kühlte sich die Probe jeweils bis auf ca. 300 °C ab. Nach der 7., 13., 25. und 27. Dehydrierung betrugen die abgegebenen Gasmengen 11,3, 10,5, 8,8 und 8,5 l (20 °C, 1 bar). Die MS-Analyse des Gases, erhalten bei der 27. Dehydrierung, ergab reinen Wasserstoff. Nach der 2. Hydrierung bestand das Restgas im Autoklaven (1,35 l von 20 °C, 1 bar) aus 91,6 mol-% $H_2$ und 6,7 mol-% $CH_4$ und nach der 27. Hydrierung aus 93,2 mol-% $H_2$ und 5,7 mol-% $CH_4$).

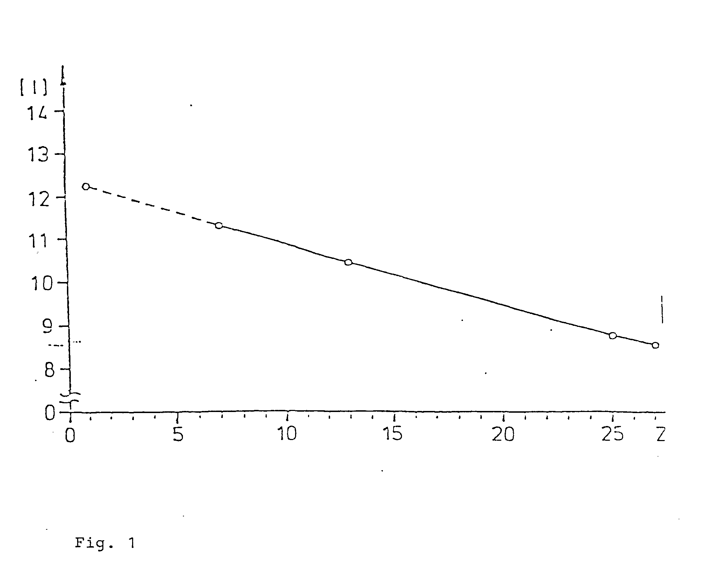

Trägt man die bei der Dehydrierung jeweils abgegebene $H_2$-Menge gegen die Cyclenzahl auf, so erhält man eine Gerade, die in Abb. 1 dargestellt ist. Nach 27 Cyclen ist die Kapazität des Speichers auf ca. 70% des ursprünglichen Wertes gesunken. Die Abnahme der Kapazität des Speichers kommt dadurch zustande, dass das im Wasserstoff beigemischte Kohlenoxid in Methan umgewandelt wird, wobei der Sauerstoff des Kohlenoxids durch das «aktive Magnesium», wahrscheinlich als MgO, gebunden wird. Bemerkenswert ist die Tatsache, dass von 1% Kohlenoxid – und infolgedessen einer stetigen Abnahme der Speicherkapazität – nach 27 Cyclen eine nur kaum merkliche Verschlechterung der Kinetik der Dehydrier-Hydrierung beobachtet wird.

Elementarzusammensetzung des zurückgewonnenen «aktiven Magnesiums»: C 0,0, H 0,34, Mg 93,10, Ti 1,55, Cl 2,86 und Ni 0,89%.

Beispiel 4

218,8 g (9,0 mol) Magnesiumpulver in 1,1 l THF wurden nach dem in der Europa-PS 0 003 564 beschriebenen Verfahren unter Verwendung des Titankatalysators (Molverhältnis Mg:Anthracen:TiCl$_4$ = 100:1:1) bei 60 °C und 5 bar zu Magnesiumhydrid hydriert, das Produkt filtriert, mit THF und Pentan gewaschen und im Hochvakuum bis zur Gewichtskonstanz getrocknet. Man erhielt 250 g Magnesiumhydrid der Zusammensetzung C 4,70, H 7,36, Mg 83,68, Ti 0,46 und Cl 2,05%.

Eine 16,0 g-Probe des so hergestellten Magnesiumhydrids wurde in einem 300 ml Edelstahlautoklaven im Vakuum (0,2 mbar) zum «aktiven Magnesium» dehydriert, indem die Temperatur des Autoklaven langsam (ca. 2 °C/min.) bis 373 °C erhöht wurde. Die Gasentwicklung setzte bei ca. 270 °C ein. Bis zur Beendigung der Gasentwicklung entwickelten sich 12,8 l Gas (20 °C/1 bar), das neben Wasserstoff geringe Anteile n-Butene (2–3%) und THF (0,5%) enthielt (MS-Analyse). In den Autoklaven wurde darauf bei 338 °C Wasserstoff mit 2,3 mol-% CO (MS-Analyse) bis zu einem Druck von 10 bar aufgepresst und mit Hilfe eines Reduzierventils konstant bei diesem Druck gehalten; der Autoklav wurde bei diesem Prozess aus einem unter Druck stehenden Vorratsbehälter mit Wasserstoff nachgespeist. Während der Hydrierung stieg die Temperatur der Probe kurzzeitig bis auf 366 °C an, fiel während 1,5 h auf 355 °C und danach auf 338 °C zurück. Das über MgH$_2$ im Autoklaven befindliche Restgas (11,2 l, 20 °C/l bar) zeigte folgende Zusammensetzung (MS-Analyse): H$_2$ 82,9, CH$_4$ 15,8 Mol-% (Rest N$_2$). Der Autoklav wurde auf 30–40 °C abgekühlt, auf 0,2 mbar evakuiert und Magnesiumhydrid anschliessend bei 338 °C und Normaldruck dehydriert, wobei 11,2 l (20 °C/l bar) Wasserstoff entstanden. Die Hydrierung des «aktiven Magnesiums» mit 2,3 mol-% CO enthaltendem Wasserstoff bei 10 bar Druck und anschliessende Dehydrierung des entstandenen Magnesiumhydrids gegen Normaldruck wurde bei gleichbleibender Autoklaventemperatur (338 °C) noch 25 mal wiederholt, wobei man sich zur Durchführung der Hydrier-Dehydrier-Cyclen wie in vorausgegangenen Beispielen der vollautomatischen Steuerapparatur bediente.

Die nominale Hydrier- bzw. Dehydrierzeit bei diesen Cyclen betrug 3 bzw. 2 h; die effektiven Hydrier- bzw. Dehydrierzeiten der Probe lagen bei 1,3 bzw. 2 h. Bei der Hydrierung stieg die Temperatur der Probe jeweils auf ca. 370 °C und bei der Dehydrierung fiel sie auf ca. 325 °C. Bei der 8., 12. bzw. 26. Dehydrierung wurden Wasserstoffabgaben von 5,9, 4,9 bzw. 2,4 l (20 °C/l bar) gemessen. Die MS-Analyse des nach der 2. Hydrierung im Autoklaven befindlichen Restgases (1,35 l, 20 °C/l bar) ergab 85,8 mol-% H$_2$ und 12,9 mol-% CH$_4$. Elementaranalyse des zurückgewonnenen «aktiven Magnesiums» (16,0 g): C 2,72, H 1,53, Mg 77,82, Ti 1,10 und Cl 1,13%.

**Patentansprüche**

1. Verfahren zur Abtrennung und Reinigung von Wasserstoff aus Wasserstoff enthaltenden Gasgemischen durch Hydrieren von Magnesium und anschliessende thermische Dehydrierung der gebildeten Magnesiumhydride, dadurch gekennzeichnet, dass man Wasserstoff aus derartigen Gasgemischen, die Methan und/oder seine höheren Homologen, Stickstoff und Edelgase sowie geringe Mengen von CO, CO$_2$, NH$_3$ und/oder H$_2$S sowie gegebenenfalls O$_2$ und/oder H$_2$O enthalten, durch Kontakt mit Magnesium in einer aktiven Form selektiv absorbiert und durch thermische Spaltung der entstandenen Magnesiumhydride Wasserstoff in reiner Form und Magnesium in aktiver Form zurückgewinnt, wobei als aktive Form des Magnesiums Magnesiummetall, erhältlich durch thermische Dehydrierung der Magnesiumhydride, eingesetzt wird, die durch ein Verfahren hergestellt werden, in dem man Magnesium in Gegenwart eines Katalysators, bestehend aus einem Halogenid eines Metalls der IV. bis VIII. Nebengruppe des periodischen Systems und einer magnesiumorganischen Verbindung bzw. eines Magnesiumhydrids sowie ggf. in Gegenwart eines policyclischen Aromaten oder eines tertiären Amins sowie ggf. in Gegenwart eines Magnesiumhalogenids MgX$_2$ mit X = Cl, Br, J, mit Wasserstoff umsetzt.

2. Verfahren zur Abtrennung und Reinigung von Wasserstoff aus Wasserstoff enthaltenden Gasgemischen durch Hydrieren von Magnesium und anschliessende thermische Dehydrierung der gebildeten Magnesiumhydride, dadurch gekennzeichnet, dass man Wasserstoff aus derartigen Gasgemischen, die Methan und/oder seine höheren Homologen, Stickstoff und Edelgas sowie geringe Mengen von CO, CO$_2$, NH$_3$ und/oder H$_2$S sowie gegebenenfalls O$_2$ und/oder H$_2$O enthalten, durch Kontakt mit Magnesium in einer aktiven Form selektiv absorbiert und durch thermische Spaltung der entstandenen Magnesiumhydride Wasserstoff in reiner Form und Magnesium in aktiver Form zurückgewinnt, wobei als aktive Form des Magnesiums Magnesiummetall eingesetzt wird, das durch thermische Dehydrierung von mit Übergangsmetallen dotiertem Magnesiumhydrid gewonnen wird, wobei die Dotierung nach einem Verfahren erfolgt, in dem man Magnesiumhydrid oder metallisches Magnesium in fein verteilter Form, ggf. in Gegenwart von Wasserstoff, in Kontakt mit einer Lösung eines Übergangsmetallkomplexes bzw. einer übergangsmetallorganischen Verbindung bringt und dadurch das elementare Übergangsmetall in äusserst feinverteilter Form an der Oberfläche der Magnesiumhydrid- bzw. Magnesiumpartikel ausscheidet.

3. Verfahren nach Anspruch 1 oder 2, dadurch gekennzeichnet, dass die Beladung des aktiven Magnesiums mit Wasserstoff bevorzugt bei Temperaturen von 150 bis 400 °C, bei Wasserstoffpartialdrucken von 0,1 bis 100 bar, und die Entladung bevorzugt bei 250 bis 450 °C, entsprechend Wasserstoffgleichgewichtsdrucken von 0,37 bis 40 bar, vorgenommen wird.

## Claims

1. A process for the separation and purification of hydrogen from hydrogenous gas mixtures by the hydrogenation of magnesium followed by thermal dehydrogenation of the magnesium hydrides formed, characterised in that hydrogen is selectively absorbed from such gas mixtures containing methane and/or its higher homologues, nitrogen and noble gases and small quantities of CO, $CO_2$, $NH_3$ and/or $H_2S$ and optionally $O_2$ and/or $H_2O$ by contact with magnesium in an active form and hydrogen is recovered in a pure form and magnesium in an active form by thermal decomposition of the magnesium hydrides produced, the active form of magnesium used being metallic magnesium obtainable by thermal dehydrogenation of the magnesium hydrides which are prepared by a process in which magnesium is reacted with hydrogen in the presence of a catalyst consisting of a halide of a metal of subgroups IV to VIII of the periodic system and an organomagnesium compound or a magnesium hydride and optionally in the presence of a polycyclic aromatic compound or of a tertiary amine and optionally in the presence of a magnesium halide $MgX_2$ where X = Cl, Br or I.

2. A process for the separation and purification of hydrogen from hydrogenous gas mixtures by the hydrogenation of magnesium followed by thermal dehydrogenation of the magnesium hydrides formed, characterised in that hydrogen is selectively absorbed from such gas mixtures containing methane and/or its higher homologues, nitrogen and noble gases and small quantities of CO, $CO_2$, $NH_3$ and/or $H_2S$ and optionally $O_2$ and/or $H_2O$ by contact with magnesium in an active form, and hydrogen is recovered in a pure form and magnesium in an active form by thermal decomposition of the resulting magnesium hydrides, the active form of magnesium used being metallic magnesium which is obtained by thermal dehydrogenation of magnesium hydride doped with transition metals, doping being carried out by a process in which magnesium hydride or metallic magnesium in a finely divided form is brought into contact with a solution of a transition metal complex or of an organic transition metal compound, optionally in the presence of hydrogen, the elementary transition metal being thereby precipitated in an extremely finely divided form on the surface of the particles of magnesium hydride or of magnesium.

3. A process according to claim 1 or 2, characterised in that charging of the active magnesium with hydrogen is preferably carried out at temperatures from 150 to 400 °C, at hydrogen partial pressures of from 0.1 to 100 bar, and discharging is preferably carried out at 250 to 450 °C, corresponding to hydrogen equilibrium pressures of from 0.37 to 40 bar.

## Revendications

1. Procédé pour séparer et purifier de l'hydrogène, à partir de mélanges gazeux contenant de l'hydrogène, par hydrogénation du magnésium puis déshydrogénation thermique des hydrures de magnésium formés, procédé caractérisé en ce qu'on provoque, par contact avec du magnésium sous une forme active, l'absorption sélective de l'hydrogène de mélanges gazeux contenant du méthane et/ou ses homologues supérieurs, de l'azote et des gaz rares, ainsi que de faibles quantités de CO, $CO_2$, $NH_3$ et/ou $H_2S$, ainsi que éventuellement $O_2$ et $H_2O$ et en ce qu'on récupère, par dissociation thermique des hydrures de magnésium résultants, l'hydrogène sous forme pure et le magnésium sous forme active, en utilisant, comme forme active du magnésium, du magnésium métallique pouvant être obtenu par déshydrogénation thermique des hydrures de magnésium, qui ont été préparés par un procédé dans lequel on fait réagir avec l'hydrogène le magnésium, en présence d'un catalyseur, consistant en un halogénure d'un métal des sous-groupes IV à VIII du système ou tableau périodique des éléments et un composé organomagnésien ou un hydrure de magnésium ainsi que, éventuellement, en présence d'un hydrocarbure aromatique polycyclique ou d'une amine tertiaire ainsi qu'éventuellement en présence d'un halogénure de magnésium $MgX_2$, dans lequel X représente Cl, Br ou I.

2. Procédé pour séparer et purifier l'hydrogène, à partir de mélanges gazeux contenant de l'hydrogène, par hydrogénation du magnésium puis déshydrogénation thermique des hydrures de magnésium formés, procédé caractérisé en ce qu'on provoque l'absorption sélective, par contact avec du magnésium sous une forme active, de l'hydrogène de tels mélanges gazeux qui contiennent du méthane et/ou ses homologues supérieurs, de l'azote et des gaz rares, ainsi que de faibles quantités de CO, $CO_2$, $NH_3$ et/ou $H_2S$ et éventuellement $O_2$ et $H_2O$, et l'on récupère, par dissociation thermique des hydrures de magnésium résultants, l'hydrogène sous forme pure et le magnésium sous forme active, en utilisant comme forme active du magnésium du magnésium métallique qui a été obtenu par déshydrogénation thermique d'un hydrure de magnésium dopé par des métaux de transition, le dopage étant réalisé selon un procédé dans lequel on met l'hydrure de magnésium ou du magnésium métallique, sous forme finement divisée, éventuellement en présence d'hydrogène, en contact avec une solution d'un complexe de métal de transition ou d'un composé organique de métal de transition et, ainsi, le métal de transition élémentaire se sépare, sous forme extrêmement bien divisée, à la surface des particules d'hydrure de magnésium ou de magnésium.

3. Procédé selon la revendication 1 ou 2, caractérisé en ce que la charge du magnésium actif par de l'hydrogène est réalisée de préférence à des températures de 150 à 400°C, sous des pressions partielles de l'hydrogène de 0,1 à 100 bars, et en ce qu'on effectue la décharge de préférence entre 250 et 450°C, ce qui correspond à des pressions d'équilibre d'hydrogène correspondant à 0,37 jusqu'à 40 bars.

Fig. 1